# EUROPEAN PATENT APPLICATION

(11) **EP 4 759 694 A1**
(43) Date of publication of application: **17.06.2026**
(21) Application number: 24218664.1
(22) Date of filing: 10.12.2024
(51) Int. Cl.: B62K 21/08, F16F 9/20

(54) **A STEERING DAMPER FOR A VEHICLE**

(71) Applicant: Öhlins Group AB, 194 27 Upplands Väsby (SE)
(72) Inventor: TORSTENSSON, Jonas Peter Olof, 194 27 Upplands Väsby (SE); RAMIC, Zlatan, 194 27 Upplands Väsby (SE)
(74) Representative: AWA Sweden AB

(57) **Abstract**

There is provided a steering damper (200) for a vehicle. The steering damper (200) comprises a hydraulic chamber (210), a piston rod (230) and a piston (220) fixedly attached to the piston rod (230). The piston (220) divides the hydraulic chamber (210) in a first chamber (213) and a second chamber (214), wherein the piston rod (230) comprises a main flow path (232) arranged to fluidly connect the first chamber (213) and the second chamber (214), and a volume regulator assembly (240) arranged internally of the piston rod (230) and is fluidly connected to the main flow path (232). The volume regulator assembly (240) comprises a separating element (242), and a regulator chamber (244) having a volume adjustable in size by adjustment of a position of the separating element (242). The volume regulator assembly (240) is configured to restrict a flow into the regulator chamber (244) from the main flow path (232), and to regulate the volume of the regulator chamber (244) to compensate for volumetric change of hydraulic fluid in the steering damper (200).

## Description

### TECHNICAL FIELD

The present disclosure generally relates to a steering damper for a vehicle, a vehicle incorporating the same, and a method of providing stability to a vehicle by means of a steering damper.

### TECHNICAL BACKGROUND

Steering dampers are commonly used to stabilize the steering of two-wheeled vehicles, such as motorcycles. The aim is to reduce uncontrollable oscillation between the handlebar and the vehicle frame. Uncontrollable oscillation may be caused by uneven road surfaces, sudden change of vehicle aerodynamic resistance or sudden loss of traction, which can lead to a loss of control. For these reasons, steering dampers may be implemented to provide resistance to the steering motion, thereby stabilizing the front wheel and improving control. This is particularly important at high speeds or on uneven surfaces, where the front wheel can become unstable. By minimizing these oscillations, steering dampers enhance rider safety and comfort. Additionally, they help maintaining the vehicle's intended path, reducing the risk of accidents. However, steering dampers add extra weight and take up valuable space of the otherwise limited space available on the motorcycle. This is particularly disadvantageous in racing applications. Further, it is difficult to provide desired resistance at both high speed and low speed handlebar movement. For instance, if a steering damper is adjusted so as to provide resistance to fast handlebar movements, the steering damper may provide too much resistance to slow movements, thereby causing them to feel heavier and require more effort.

Accordingly, there is demand for steering dampers with reduced weight and allows for improved vehicle stabilization and handling.

### SUMMARY

At least some of the above-mentioned drawbacks are at least partly overcome by the present disclosure according to the independent claims. Preferred embodiments are set forth in the dependent claims.

The inventors of the present disclosure have identified that, in steering dampers, hydraulic fluid within the cylinder tube is subject to temperature variations caused by external factors, such as ambient climate conditions or heat radiating from a vehicle's engine, as well as internal factors, such as heat generated by the conversion of mechanical energy into thermal energy as the damper resists motion. These temperature variations may cause the hydraulic fluid to fluctuate in volume. This may, if not accounted for, significantly impact the performance of the steering damper. To address this, steering dampers may provide a regulator chamber fluidly connected to a hydraulic chamber to compensate for volumetric change of the hydraulic fluid stored therein. The regulator chamber may, by adjustment of a moving separating element, store or release hydraulic fluid as needed to compensate for the volumetric variations. The inventors of the present disclosure have identified that it would be particularly advantageous to integrate the components for compensating for volumetric variation of hydraulic fluid in a steering damper inside a piston rod of said steering damper. Thus, in accordance with a first aspect of the disclosure, there is provided a steering damper for a vehicle comprising a hydraulic chamber, a piston rod, and a piston fixedly attached to the piston rod. The piston divides the hydraulic chamber in a first chamber and a second chamber. The piston rod comprises a main flow path arranged to fluidly connect the first chamber and the second chamber. The piston rod further comprises a volume regulator assembly arranged internally of the piston rod and is fluidly connected to the main flow path. The volume regulator assembly comprises a separating element, and a regulator chamber having a volume adjustable in size by adjustment of a position of the separating element. The volume regulator assembly is configured to restrict a flow into the regulator chamber from the main flow path, and to regulate the volume of the regulator chamber to compensate for volumetric change of hydraulic fluid in the steering damper. The present disclosure is based on the insight that, by integrating the main flow path and the volume regulator assembly inside the piston rod, the complexity of said features, as well other features of the steering damper according to the present disclosure, can be significantly reduced. This in turn allows for a steering damper with reduced weight and improved performance. Furthermore, this may also allow for a more compact steering damper with a simplified exterior design. This may advantageously reduce manufacturing cost and/or complexity. As opposed to a steering damper having a main flow path for connecting the compression and rebound chamber located outside the piston rod, the present disclosure enables a reduction of length of the main flow path. This because, instead of the main flow path having to extend between far ends of the compression and rebound chambers, the present disclosure enables the main flow path to fluidly connect the compression and rebound chambers over the piston, which is a significantly shorter distance. The reduction in length is both advantageous for reducing complexity of the steering damper, as well as for reducing the amount of hydraulic fluid in the main flow path. Reducing the amount of hydraulic fluid in the main flow path is advantageous for reducing the inertia required to accelerate the hydraulic flow in any direction. This may improve the responsiveness of the steering damper, increasing its performance. Furthermore, integrating the volume regulator assembly in the piston rod is advantageous for multiple reasons. Firstly, it is closely positioned to the main flow path, minimizing the distance there between. This is advantageous for providing a short and/or a straightforward fluid connection between the main flow path and the volume regulator assembly. Reducing the length reduces the required amount of hydraulic fluid, which minimizes weight and the potential for volumetric hydraulic fluid variation. A straightforward design may reduce pressure loss by minimizing resistance and turbulence, ensuring more efficient movement of hydraulic fluid. Secondly, by integrating the volume regulator assembly in the piston rod, as opposed to integrating it into the cylinder tube, allows for a shorter cylinder tube. This is advantageous for reducing the weight of the steering damper as well as the space it occupies. In addition, the present disclosure provides for a simplistic design. In addition, the present disclosure provides a steering damper in which any free play of components of the piston rod is removed. As steering dampers commonly are used for two wheeled vehicles, such as motorcycles, and positioned above the mass centre of gravity, reducing the weight of a steering damper is particularly advantageous since it reduces the bikes tendency to tip over and improves overall balance. This may make the bike more stable and easier to control. Because of this, the present disclose, enabling a steering damper with a reduced weight is particularly advantageous. The term volume regulator assembly may refer to an assembly for compensating for volumetric variations of hydraulic fluid in the steering damper. The first chamber may refer to the compression chamber or the rebound chamber of a steering damper, while the second chamber may refer to the other one. The term separating element may refer to any element suitable for delimiting an end of the regulator chamber so to vary a volume of the regulator chamber capable of storing hydraulic fluid. The separating element may refer to a piston, a flexible membrane, or the like. The separating element may refer to a free piston. A free piston may refer to an internal, movable piston that separates hydraulic fluid from biasing means. Biasing means may for example be a spring or a gas chamber. The term fluidly connected may refer to a connection between a first component and a second component allowing for exchange of hydraulic fluid. The first component and the second component may be directly connected to one another or indirectly connected to one another, i.e., by one or more additional elements (e.g., a valve, a restriction, etc). It may allow seamless and uninterrupted flow of a fluid between components. The term may still allow for the flow to be selectively interrupted or controlled, for example, by a valve.

According to an embodiment, the volume regulator assembly comprises a flow restriction path for allowing a restricted flow of hydraulic fluid between the main flow path and the regulator chamber. This may improve control of the rate at which hydraulic fluid is moveable between the main flow path and the regulator chamber, thereby providing a more capable steering damper in terms of performance. Furthermore, by restricting hydraulic fluid entering the regulator chamber, the responsiveness of the steering damper may be maintained while simultaneously enabling hydraulic fluid to enter the regulation chamber due to increase in volume. By providing a more capable steering damper in terms of performance, it may be meant that the restriction path may advantageously prevent the separating element from absorbing an excessive amount of hydraulic pressure during, for example, a compression stroke, avoiding excessive movement of the separating element. Consequently, this prevents the formation of a vacuum pocket behind the piston during a compression stroke, which would otherwise result in a loss of dampening force. Alternatively, the biasing means pressurizing the separating element may be modified to be strong enough to prevent excessive movement of the separating element.

According to an embodiment, the volume regulator assembly comprises a check valve fluidly connected between the main flow path and the regulator chamber. The check valve is configured to open in response to a pressure in the regulator chamber being higher than a pressure in the main flow path. This allows for hydraulic fluid quickly exiting the regulator chamber in case of hydraulic pressure in the main flow path being lower than hydraulic fluid pressure in the regulation chamber. Thereby, the volume regulator assembly is able to quickly compensate for volumetric reduction of hydraulic fluid in the hydraulic chamber. Moreover, a steering damper may comprise one or more sealing elements to seal hydraulic fluid from an exterior of the steering damper. The sealing elements may seal the steering damper during both pressure increases, i.e., when the pressure of the hydraulic fluid in one of the chambers increases relative an ambient pressure (pressure outside the steering damper, typically atmospheric pressure) and pressure drops, i.e., when the pressure of the hydraulic fluid in one of the chambers decreases relative the ambient pressure. However, such sealing elements may seal better during instances of pressure increases and in particular during instances of high pressure, and may seal relatively worse during instances of pressure drops and in particular during instances of low pressure (i.e., lower than ambient pressure), thus potentially allowing ambient gas (e.g., air) to leak into the steering damper. Thus, quickly compensating for a reduction in hydraulic fluid volume may be advantageous to mitigate negative effects from pressure drops in the hydraulic fluid, such as air entering the hydraulic cylinder. This capability may also be beneficial during the filling of the hydraulic cylinder with hydraulic fluid, as well as during manufacturing and maintenance.

According to an embodiment, the flow restriction path is integrated with the check valve. The flow restriction path may be provided by the check valve, which may be advantageous for reducing the number of essential parts. In addition, the length of the flow restriction path may be minimized since it may only be required to extend though a single component of the check valve, for example a valve member configured to seal the check valve.

According to an embodiment, the volume regulator assembly further comprises a spring arranged to bias the separating element towards a neutral position wherein optionally the spring is a gas spring or a mechanical spring. By this, the separating element may be biased to move in a first direction, in relation to the piston rod, so to move hydraulic fluid out of the regulator chamber when the hydraulic pressure in the main flow path is lower than in the regulator chamber. Furthermore, the spring allows the separating element to move in a second direction, which is opposite the first direction, to allow fluid to enter the regulator chamber.

According to an embodiment, the steering damper further comprising an adjustable main flow path valve for regulating a flow resistance to a hydraulic flow flowing in the main flow path. From this, the damping characteristics of the steering damper can be regulated. In addition, by integrating the first flow valve in the piston rod, a more simplistic technical structure is provided. This is advantageous for reducing both the weight and the space occupied by the steering damper.

According to an embodiment, the steering damper further comprising a main flow path valve adjuster for adjusting the flow resistance provided by the main flow path valve from a distance. Thereby, remote adjustment of the main flow path valve is enabled. This in turn allows for improved control since a user may adjust the steering damper quickly and efficiently.

According to an embodiment, the main flow path valve adjuster is arranged coaxially to the piston rod at an end thereof. Thereby, a space efficient structure of the steering damper is provided. Additionally, for a main flow path valve adjusted by rotation, the main flow path adjuster is strategically positioned around the main flow path valve's rotational centre, minimizing rotational resistance, and enabling efficient adjustment. The main flow path valve adjuster may be arranged eccentrically to the piston rod at an end thereof. The main flow path adjuster may be arranged offset relative to a longitudinal axis of the piston rod. Alternatively, the main flow path adjuster may be arranged inside the piston rod. The main flow path adjuster may be arranged eccentrically or coaxially inside the piston rod.

According to an embodiment, the main flow path valve adjuster is adjustable by manual means or by electric means. Having the main flow path valve adjuster adjustable by mechanical means may provide for a reliable and cost-effective solution. Having the main flow path valve adjuster adjustable by electric means may allow for precise and consistent adjustments, which may improve efficiency and performance of the steering damper. The adjustment of the main flow path valve adjuster may be adjustable by the electric means based on various parameters such as speed, event-driven algorithms, or predefined settings. The adjustment means may comprise an electronic control unit, ECU, configured to control said adjustment. The ECU may be configured to couple communicatively, either by wired communication or by wireless communication, with an external control device to receive command therefrom. Said external control device may comprise a control interface for enabling a user to control the ECU. The ECU may comprise, alternatively or in combination, pre-programmed commands of how to adjust the main flow path valve. The ECU may be configured to select one or more pre-programmed commands based on sensor information or riding events established based on sensor information. The ECU may be configured to establish said riding events based on sensor information. The ECU may be configured to be communicatively coupled, either by wired communication or by wireless communication, with at least one sensor to provide said sensor information. At least one sensor of said at least one sensor may be an Inertial Measurement Unit, IMU. The IMU may comprise at least one of, or any combination of, at least one gyroscope, at least one accelerometers, and at least one magnetometer. The IMU may be configured to measure motion-related parameters such as acceleration, angular velocity, and sometimes orientation. Said sensor information may comprise any one of said motion-related parameters. The ECU may be configured to establish riding events based on said sensor information. The riding events may be characterized with a duration in time. As non-limiting examples, a riding event may be a vehicle travelling along an upward slope, or travelling along a downward slope, travelling at a certain speed or in a certain speed interval, or interacting with a road bump or interacting with a road pit. The ECU may be configured to determine a riding event based on said sensor information and adjust the main flow path valve accordingly to improve performance and/or comfort and/or safety, and/or based on any other criteria. Thus, steering of the vehicle may be facilitated or hindered based on riding event. As a non-limiting example, steering may be facilitated for low speeds. As a non-limiting example, steering may be hindered during higher speeds. Said main flow path valve adjuster may comprise an electric actuator, such as an electric motor. The electric actuator may be coupled to the main flow path valve to adjust the main flow path valve between a first open state and a second open state, or between a closed state and an open state. The electric actuator may also adjust the main flow path valve to one or more intermediate states between closed state and the open state. Said main flow path valve adjuster may comprise a solenoid device. The solenoid device may comprise a plunger axially moveable to close and open the main flow path valve, and a solenoid configured to generate a magnetic field for axially moving the plunger in response to an electrical current flowing through the solenoid. The electrical current may be controlled so as to adjust the main flow path valve between a first open state and a second open state, or between a closed state and an open state.

According to an embodiment, the main flow path valve is a needle valve or a spool valve. A needle valve may be ideal for precise flow control, allowing fine-tuned adjustments to the characteristics of the steering damper. A spool valve may offer versatility and can efficiently manage high flow rates, making it suitable for enabling rapid fluid movement. Each of a needle valve and a spool valve may allow for being adjusted from a distance, for example by an elongated needle rod or a spool rod.

According to an embodiment, the hydraulic chamber extends from a first end to a second end and wherein the piston rod is extendable through the first end and the second end of the hydraulic chamber. By this, the piston rod may be defined as a through-rod. This design allows the piston rod to extend out of both ends of the hydraulic chamber, providing balanced force and speed characteristics on both sides of the piston. The piston rod may advantageously be designed to extend through both the first and second ends of the hydraulic chamber throughout its intended range of motion.

According to an embodiment, the volume regulator assembly is arranged inside a portion of the piston rod at least partly displaceable outside the hydraulic chamber. This allows for a more compact design of the steering damper.

According to an embodiment, the piston rod comprises a first elongated portion and a second elongated portion which are detachably connected to each other. By this, the assembly process of the steering damper may be simplified. More specifically, as opposed to a steering damper providing a single piece piston rod, the present disclosure allows for improved accessibility to components integrated in the first or the second portion of the piston rod. For example, during assembly of the steering damper of the present disclosure, the first portion of the piston rod may be assembled first, and thereafter, the interior components integrated in the first portion of the piston rod may be assembled or adjusted. Thereafter, the second portion of the piston rod may be assembled in the steering damper, i.e. connected to the first portion. Thereafter, the final assembly or adjustment of the integrated components may be performed. Integrated components in the piston rod may refer to one or more of the main flow path, the main flow path valve, the first path valve adjuster, or any of the components of the volume regulator assembly. In addition, providing the first and second elongated portions are advantageous for fixedly attaching components to the piston rod, for example the piston.

According to a second aspect of the disclosure, there is provided a vehicle comprising a steering damper as disclosed herein. This provides the vehicle with advantages inherited from the steering damper as disclosed herein. Providing the vehicle with a lighter and more capable steering damper may improve handling and stability, making the vehicle easier to control.

According to a third aspect of the disclosure, there is provided a method of providing stability to a vehicle by means of a steering damper as disclosed herein. The method comprises: absorbing kinetic energy from a vehicle's steering movement by converting it to heat by providing fluid resistance to hydraulic fluid flowing between the first chamber and the second chamber via the main flow path, restricting a flow into the regulator chamber from the main flow path, and regulating the volume of the regulator chamber to compensate for volumetric change of hydraulic fluid in the steering damper. This provides for an efficient method for providing a lightweight steering damper with improved performance. When hydraulic fluid increases in temperature, and thereby increase in volume, hydraulic fluid may enter the regulator chamber to compensate for the volumetric variation of hydraulic fluid. Furthermore, as temperature decreases and hydraulic fluid volume decreases, hydraulic fluid is enabled to exit the regulator chamber. Compensating for volumetric variations of hydraulic fluid is important for maintaining pressure balances within the steering damper. This in turn, helps to maintain the steering dampers effectiveness and longevity.

According to a fourth aspect, a computer program is provided. The computer program comprises instructions which, when the program is executed by a computer, cause the computer to carry out the method according to the third aspect or any embodiments thereof.

According to a fifth aspect, a computer-readable storage medium is provided. The computer-readable storage medium comprises instructions which, when executed by a computer, cause the computer to carry out the method according to the third aspect or any embodiments thereof. Effects and features of the second and third and fourth and fifth aspects are largely analogous to those described above in connection with the first aspect. Embodiments mentioned in relation to the first aspect are largely compatible with the second and third and fourth and fifth aspects. It is further noted that the inventive concepts relate to all possible combinations of features unless explicitly stated otherwise. The invention is defined by the appended independent claims, with embodiments being set forth in the appended dependent claims, in the following description and in the drawings. It is to be understood that this disclosure is not limited to the particular component parts of the device described or steps of the methods described as such device and method may vary. It is also to be understood that the terminology used herein is for purpose of describing particular embodiments only and is not intended to be limiting. It must be noted that, as used in the specification and the appended claims, the articles "a", "an", "the", and "said" are intended to mean that there are one or more of the elements unless the context clearly dictates otherwise. Thereby, for example, reference to "a unit" or "the unit" may include several devices, and the like. Furthermore, the words "comprising", "including", "containing" and similar wordings do not exclude other elements or steps.

### BRIEF DESCRIPTION OF THE DRAWINGS

The disclosure is described in the following illustrative and non-limiting detailed description of exemplary embodiments, with reference to the appended drawings, wherein:
Fig. 1 shows a schematic cross-sectional view of a steering damper according to one embodiment of the present disclosure;
Fig. 2 shows a schematic cross-sectional view of a steering damper according to a further embodiment of the present disclosure;
Figs. 3a-3b shows a schematic illustration of a check valve according to an embodiment of the present disclosure.
Figs. 4a-4b shows a schematic illustration of a main flow path valve according to an embodiment of the present disclosure.
Fig. 5 shows a perspective view of an illustration of a steering damper according to one embodiment of the present disclosure.
Fig. 6 shows a vehicle provided with a steering damper according to an embodiment of the present disclosure.
Fig. 7 shows a schematic flow chart of a method according to an embodiment of the third aspect of the present disclosure.

### DETAILED DESCRIPTION OF EMBODIMENTS

Hereinafter, the disclosure in various aspects will be described with reference to the illustrative drawings. All figures are schematic, not necessarily to scale, and generally only show parts which are necessary in order to elucidate the disclosure, wherein other parts may be omitted or merely suggested. Throughout the figures the same reference signs designate the same, or essentially the same features. Various elements and arrangements are schematically depicted in the drawings for purposes of explanation only and so as to not obscure the description with details that are well known to those skilled in the art. Nevertheless, the attached drawings are included to describe and explain illustrative examples of the disclosed subject matter. The words and phrases used herein should be understood and interpreted to have a meaning consistent with the understanding of those words and phrases by those skilled in the relevant art. No special definition of a term or phrase, i.e., a definition that is different from the ordinary and customary meaning as understood by those skilled in the art, is intended to be implied by consistent usage of the term or phrase herein. To the extent that a term or phrase is intended to have a special meaning, i.e., a meaning other than that understood by skilled artisans, such a special definition will be expressly set forth in the specification in a definitional manner that directly and unequivocally provides the special definition for the term or phrase.

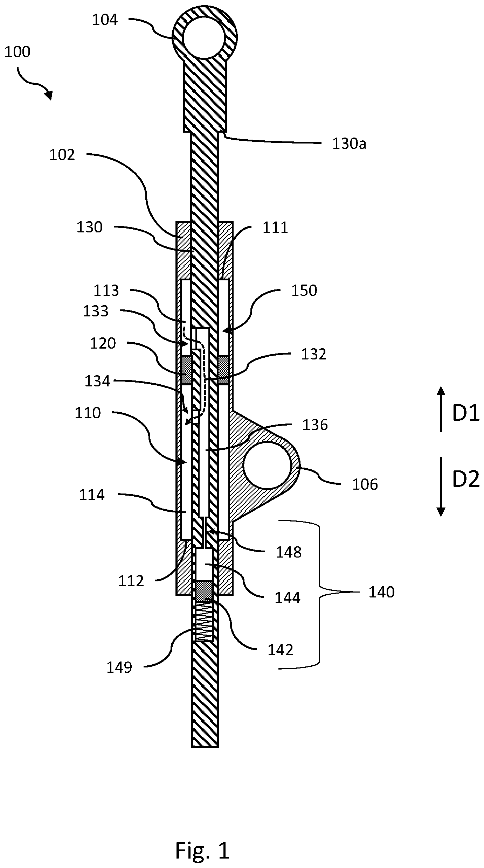

Fig.1 shows a first exemplary embodiment of a steering damper 100 for a vehicle according to an embodiment of the present disclosure. The steering damper 100 comprises a hydraulic chamber 110. The hydraulic chamber 110 is positioned inside a cylinder tube 102 of the steering damper 100. The hydraulic chamber 110 has a longitudinal extension from a first end 111 to a second end 112. They hydraulic chamber 110 may have cylindrical cross section along its longitudinal extension. The steering damper 100 further comprises a piston rod 130 and a piston 120. The piston 120 is fixedly attached to the piston rod 130. The piston rod 130 may be detachably connected to the piston rod 130. The piston 120 divides the hydraulic chamber 110 in a first chamber 113 and a second chamber 114. The piston rod 130 is movably arranged in the hydraulic chamber 110. A first direction D1 may be defined as a direction along a longitudinal axis of the piston rod 130, from the second end 112 towards the first end 111 of the hydraulic chamber 110. A second direction D2 may be defined as the opposite direction. The piston rod 130 is moveable relative the hydraulic chamber 110 in the first direction D1 or in the second direction D2. The piston rod 130 may be configured to be moveable in the first direction D1 until the piston 120 abuts the first end 111 of the hydraulic chamber 110. The piston rod 130 may be configured to be moveable in the second direction D2 until the piston 120 abuts the second end 112 of the hydraulic chamber 110. A compression stroke of the steering damper 100 may be defined as when the piston rod 130 moves in the second direction D2 relative to the hydraulic chamber 110. A rebound stroke of the steering damper 100 may be defined as when the piston rod 130 moves in the first direction D1 relative to the hydraulic chamber 110. The piston rod 130 comprises a main flow path 132 arranged to fluidly connect the first chamber 113 and the second chamber 114. Thereby, hydraulic fluid may flow between the first chamber 113 and the second chamber 114, via the main flow path 132. The main flow path 132 may for example extend between a first port 133 of piston rod 130 and a second port 134 of the piston rod 130. The first port 133 is arranged to be located inside the first chamber 113. The second port 134 is arranged to be located inside the second fluid chamber 114. The piston rod 130 may comprise a cavity 136 fluidly connecting the first port 133 and the second port 134. In other words, the main flow path 132 may be arranged internally of the piston rod 130. During the compression stroke of the steering damper 100, hydraulic fluid may flow from the second chamber 114, via the main flow path 132, to the first chamber 113. During the rebound stroke of the steering damper 100, hydraulic fluid may flow from the first chamber 113, via the main flow path 132, to the second chamber 114. The piston rod 130 further comprises a volume regulator assembly 140 arranged internally of the piston rod 130. The volume regulator assembly is fluidly connected to the main flow path 132. The volume regulator assembly 140 may be fluidly connected to the main flow path 132 via the cavity 136. The volume regulator assembly 140 comprises a separating element 142. In the exemplified embodiment, the separating element 142 is a piston. Alternatively, the separating element may be a flexible membrane. The volume regulator assembly 140 further comprises a regulator chamber 144. The regulator chamber 144 has a volume adjustable in size by adjustment of a position of the separating element 142. The separating element 142 is movable relative the piston rod 130 in the first direction D1 and the second direction D2. The separating element 142 may be biased to a neutral position by a biasing means. A biasing means may for example be a mechanical spring. Alternatively, a biasing means may be a gas spring. Alternatively, a biasing means may be a resilient element. The separating element 149 being biased towards a neutral position may refer to being biased towards a position, e.g., a central position, where no external forces act upon it. However, the hydraulic pressure in the regulator chamber 144 may prevent the separating element 142 from reaching this neutral position. Instead, the separating element 142 may remain stationary at a position when it is in equilibrium from the biasing means and the hydraulic pressure of the regulator chamber 144. When the separating element 142 moves relative the piston rod 130 in the first direction D1, the volume of the regulation chamber 144 decreases. When the separating element 142 moves relative the piston rod 130 in the second direction D2, the volume of the regulation chamber 144 increases. If, for example, hydraulic fluid inside the hydraulic chamber 110 would increase in temperature, it may increase in volume. The temperature of the hydraulic fluid can rise due to various factors. For instance, the steering damper 100 may absorb vibrations between the vehicle's handlebar and frame, converting kinetic energy into heat. Additionally, external temperature changes, for example from the surrounding environment and/or the vehicle's engine, can also significantly contribute to an increase in temperature the hydraulic fluid. The volume regulator assembly 140 is configured to restrict a flow into the regulator chamber 144 from the main flow path 132. This may be to compensate for a volumetric increase of the hydraulic fluid in the steering damper 100. The volume regulator assembly 140 is advantageously arranged to restrict the flow from the main flow path 132 into the regulator chamber 144, for example, not to reduce the dampening force of the steering damper 100. The volume regulator assembly may for example restrict the flow into the regulator chamber 144 by means of an orifice or a valve. If, for example, the temperature of the hydraulic fluid would decrease, either due to external temperatures or a reduction of movement of piston rod 130 relative the hydraulic chamber 110, the volume of the hydraulic fluid would decrease. As the volume of hydraulic fluid decreases, the hydraulic pressure in the regulator chamber 144 may decrease. This in turn may cause the separating element 142 to be regulated to move in the first direction D1, relative the piston rod 130. The separating element 142 may for example be regulated to move by the biasing means. Thereby, the volume regulator assembly 140 is configured to regulate the volume of the regulator chamber 144 to compensate for volumetric change of hydraulic fluid in the steering damper 100. In this example, the volume regulator assembly 140 regulates the regulator chamber 144 to be compressed by the separator element 142 to compensate for a volumetric decrease of hydraulic fluid. The steering damper 100 may further comprise a first mounting bracket 104 fixedly attached to a first end 130a of the piston rod 130. The steering damper 100 may further comprises a second mounting bracket 106 fixedly attached to the cylinder tube 102. In this exemplified embodiment, the volume regulator assembly 140 comprises a flow restriction path 148 for allowing a restricted flow of hydraulic fluid between the main flow path and the regulator chamber 144. The flow restriction path 148 extends between the cavity 136 and the regulator chamber 144. The flow restriction path 148 may be arranged so that its flow-through area does not depend on pressure. The flow-through area may refer to a cross-sectional area through which hydraulic fluid flows through the flow restriction path 148. The flow restriction path 148 may refer to a bleed flow path.

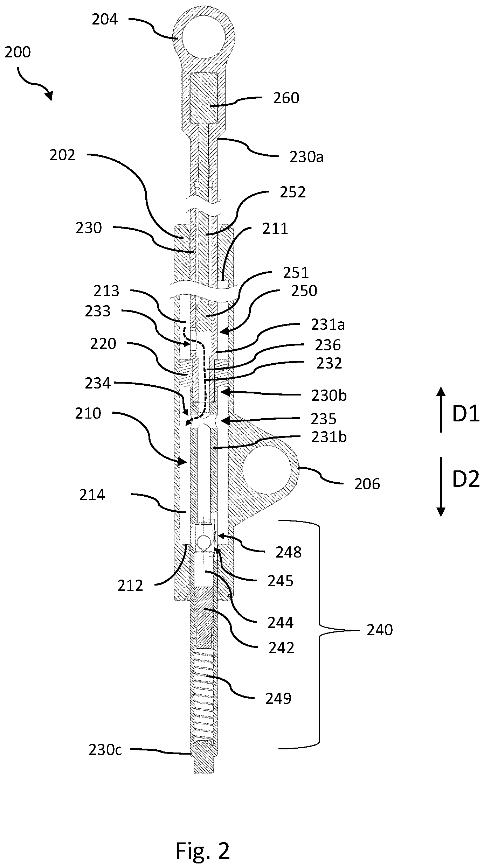

In Fig. 2, a further embodiment of a steering damper 200 for a vehicle according to an embodiment of the present disclosure is shown. In addition to the above, the volume regulator assembly 240 comprises a check valve 245. The check valve 245 is fluidly connected between the main flow path 232 and the regulator chamber 244. The check valve 245 is configured to open in response to a pressure in the regulator chamber 244 being higher than a pressure in the main flow path 232. Thereby, when fluid pressure in the main flow path 232 is higher than fluid pressure in the regulator chamber 245, the check valve 245 is configured to be closed.

Furthermore, in the exemplified embodiment, the piston rod 230 comprises a third port 235. The third port is fluidly connected to the cavity 236, and arranged to be located in the second chamber 214.

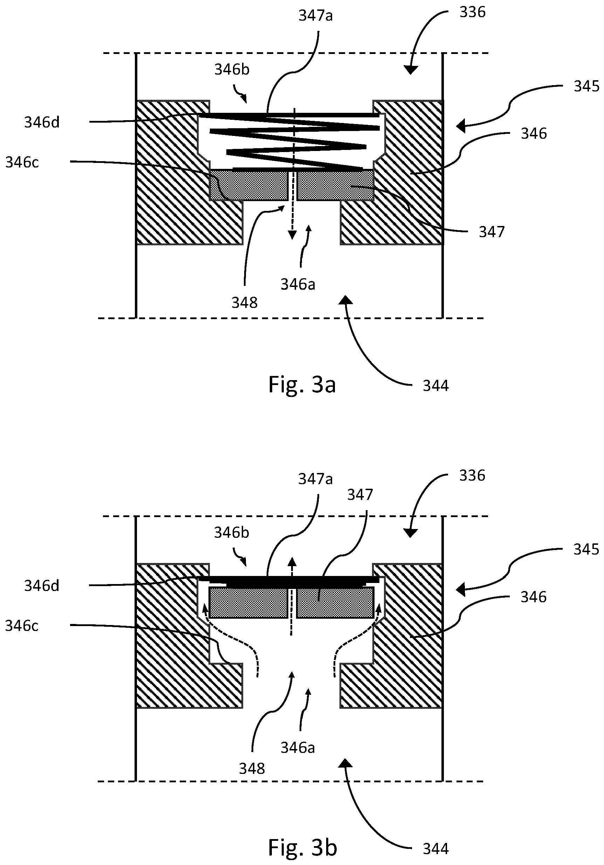

In Figs. 3a and 3b, a further embodiment of a check valve 345 is shown for a steering damper 300 of the present disclosure. In this embodiment, the flow restriction path 348 is integrated with the check valve 345. The check valve 345 comprises of valve body 346 and a valve member 347. The valve member 347 is configured to be movable relative to the valve body 346. The valve body 346 comprises of an inlet 346a and an outlet 346b. The inlet 346a and the outlet 346b are fluidly connected to each other. In the exemplified embodiment, the inlet 346a is arranged in direct connection to the regulator chamber 344, and the outlet 346b is arranged in direct connection with the cavity 336. The valve body 346 further comprises a first shoulder 346c and a second shoulder 346d. In the exemplified embodiment, the check valve 345 further comprises a valve spring 347a. The valve spring 347a may at a first end thereof abut the second shoulder 346d, and at a second end, which second end is opposite the first end, abut the valve member 347. The valve spring 347a may bias the valve member 347 to abut the first shoulder 346c. As shown in Fig. 3a, the valve member 347 abut the first shoulder 346c and the check valve 345 is closed. Since the restriction path 348 is integrated in the check valve 345, hydraulic fluid may flow through the check valve 345 from the main flow path, via the cavity 336 and the restriction path 348, to the regulator chamber 344. In this embodiment, the restriction path 348 is integrated in the valve member 347. Alternatively, the restriction path 348 may be integrated in the valve body 346.

Now with reference to Fig. 3b. Here the hydraulic pressure in the regulator chamber 344 is higher than in the cavity 336. From this the valve member 347 has been pressurized to be moved in a direction from the first shoulder 346c towards the second shoulder 346d. Thereby, the check valve 345 is open. From this, hydraulic fluid is enabled to flow from the regulator chamber 344, via an opening of the check valve 345 and the restriction path 348, to the cavity 336. The hydraulic flow from the inlet 346a to the outlet 346b, when the check valve 346 is open may be enabled to be significantly greater than the hydraulic flow from the outlet 346b to the inlet 346a when the check valve 346 is closed. Now again with reference to Fig. 2. In this exemplified embodiment, the volume regulator assembly 230 further comprises a spring 249. The spring 249 is arranged to bias the separating element 242 towards a neutral position. As shown in the embodiment of Fig. 2, the spring 249 may be a mechanical spring. Alternatively, it may be a gas spring. The separating element 249 being biased towards a neutral position by a spring may refer to that that the spring pushes the separating element 242 to a position, e.g., a central position, where no external forces act upon it. However, the hydraulic pressure in the regulator chamber 244 may prevent the separating element 242 from reaching this neutral position. Instead, the separating element 242 may remain stationary at a position when it is in equilibrium from the pressure of the spring 249 and the hydraulic pressure of the regulator chamber 244.

In this exemplified embodiment, the steering damper 200 comprises an adjustable main flow path valve 250 for regulating a flow resistance to a hydraulic flow flowing in the main flow path 232. In this embodiment the main flow path valve 250 is a spool valve. Alternatively, the main flow path valve 250 may be any other type of suitable valve. The main flow path valve 250 comprises a spool 251 and a spool rod 252. The spool 251 is fixedly coupled to the spool rod 252. The spool rod 252 is movable in the first direction D1 and the second direction D2 relative to the piston rod 230. The main flow path valve 250 is arranged to increase flow resistance in the main flow path 232 by moving the spool 251 in the second direction D2 relative the first port 233 so that an opening area of the first port 233 decreases. The main flow path valve 250 is arranged to reduce flow resistance in the main flow path 232 by moving the spool 251 in the first direction D1 relative the first port 233 so that an opening area of the first port 233 increases. By opening area, it may be meant the flow-through cross-sectional area.

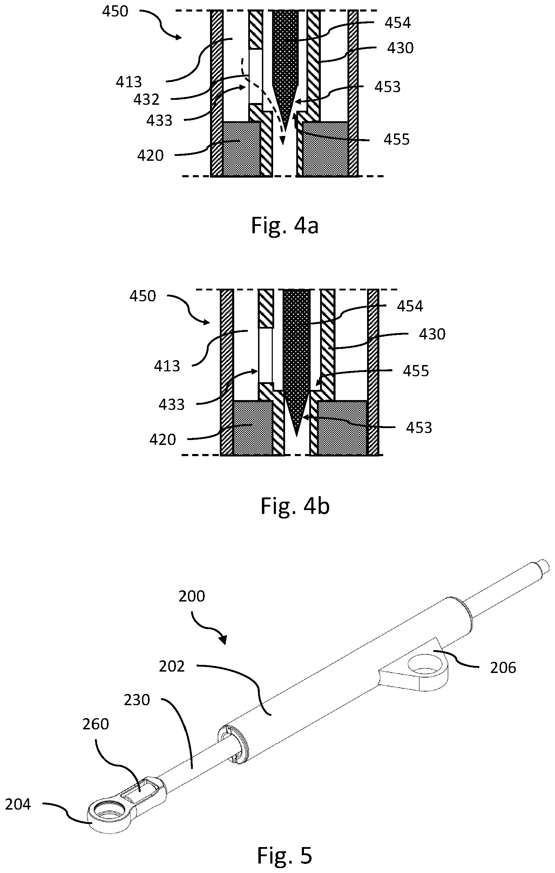

According to a further embodiment of a steering damper 400, as shown in Figs. 4a and 4b, the main flow path valve 450 is a needle valve. In this embodiment, the main flow path valve 450 comprises a needle 453 and a needle rod 454. The needle 453 may be tapered. The needle 453 fits into a matching seat 455 in the piston rod 430. The needle 453 is arranged to move in and out of the seat 455 to adjust the flow resistance of the main flow path 432. In Fig. 4a, the main flow path valve 450 is shown in an open configuration. In Fig. 4b, the main flow path valve 450 is shown in a closed configuration. The main flow path valve may be controlled by electrical means. It may for example be a solenoid valve.

Now with reference to Fig. 2. The steering damper 200 may comprise a main flow path valve adjuster 260. The main flow path adjuster 260 is for adjusting the flow resistance provided by the main flow path valve 250 from a distance. The main flow path adjuster 260 may adjust the main flow path valve by adjusting the position of the spool rod 251 relative the first port 233. The main flow path adjuster 260 may be a click adjuster and/or a screw adjuster. The main flow path valve adjuster 260 may be arranged coaxially to the piston rod 230 at an end thereof. The main flow path adjuster 260 may be arranged to extend coaxially to a longitudinal extension of the piston rod 230. The piston rod 230 extends from a first end 230a to a second end 230c. In the exemplified embodiment, the main flow path valve adjuster 260 is arranged at the first end 230a of the piston rod 230. Alternatively, the main flow path valve adjuster 260 may be arranged elsewhere on the piston rod 230. Alternatively, the main flow path adjuster 260 may be arranged inside the piston rod 230. The main flow path adjuster 260 may be arranged eccentric or coaxially inside the piston rod 230. The main flow path valve adjuster 260 may be adjustable by manual means. For example, the main flow path adjuster 260 may be adjusted by turning a screw or a knob. Alternatively main flow path valve adjuster 260 may be adjustable by electric means. For example, the electric means may be an electric motor arranged to precisely control the position of the needle rod 252 to adjust the flow resistance of the main flow path valve 250. The piston rod 230 may be arranged in a position where it extends through the first end 211 and the second end 212 of the hydraulic chamber 210. Thereby, the piston rod 230 extends through the entire length of the hydraulic chamber 210. It is conceivable that the piston rod 230 may be single ended. By a single-ended piston rod it may be meant that the piston rod extends through only one end of the hydraulic chamber. The volume regulator assembly 240 may be arranged inside a portion of the piston rod 230 which is at least partly displaceable outside the hydraulic chamber 210. Thereby, the piston rod 230 is movable within the hydraulic chamber 210 so that at least part of the volume regulator assembly 240 is located outside the hydraulic chamber. The piston rod 230 has a longitudinal extension from a first end 230a to a second end 230c. The piston rod 230 may comprise a first elongated portion 231a and a second elongated portion 231b which are detachably connected to each other. The first elongated portion 231a extends from the first end 230a of the piston rod 230 to an intermediate section 230b of the piston rod 230. The intermediate section 230b is positioned between the first end 230a and the second end 230c of the piston rod 230. The intermediate section 230b is arranged to be positioned within the hydraulic chamber 210. The second elongated portion 231b extends from the second end 230c to the intermedia section 230b. The first elongated portion 231a and the second elongated portion 231b may be detachable connected to each other by a threaded connection. Alternatively, they may be detachably connected to each other by a snap fit design. Alternatively, they may be detachably connected to each other by a magnetic connection. In the shown embodiment, the first elongated portion 231a and the second elongated portion 231b are detachably connected to each other so to lock the piston 220 to the piston rod 230. Thereby providing an advantageous method for fixedly attaching the piston 210 to the piston rod 230. Thus, the piston 220 may be detachably connected to the piston rod 230. Further, the main flow path 230 extends through the first elongated portion 231a and the second elongated portion 231b.

In Fig. 5, the steering damper 200 is shown in a perspective view. The steering damper 200 is shown having cylinder tube 202 provided with the second mounting bracket 206. The piston rod 230 is mounted so to extend through the cylinder tube 202. The main flow path valve adjuster 260 is mounted coaxially to the longitudinal extension of the piston rod 230. The first mounting bracket 204 is fixedly attached to the piston rod 230. The second mounting bracket is fixedly attached to the cylinder tube 202.

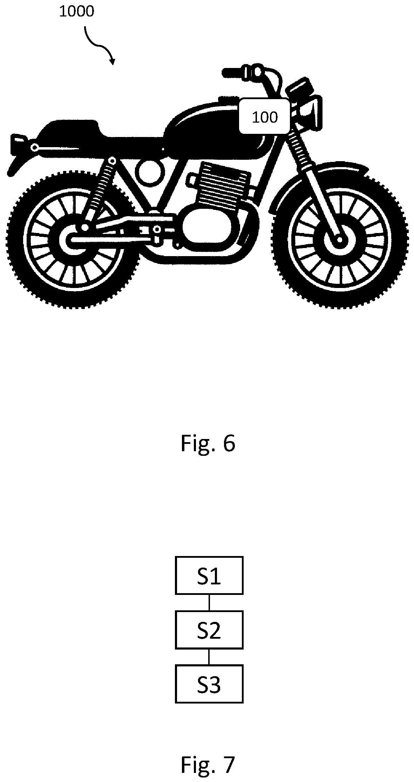

Now with reference to Fig. 6, according to a second aspect of the present disclosure, there is provided a vehicle 1000 comprising the steering damper 100 as disclosed herein. The steering damper 100 may be mounted on the vehicle 1000 by attaching the first mounting bracket 204 to the frame and the second mounting bracket 206 to the front fork. The second mounting bracket 206 may be mounted on the fork bridge/triple clamp of the front fork. This setup allows the steering damper 100 to effectively reduce unwanted steering oscillations of the vehicle 1000. In the shown embodiment, the vehicle is a 2-wheeled motorbike. It is conceivable that other types of vehicles are used, such as a three-wheeled vehicle or a four-wheeled vehicle.

Now with reference to Fig. 7, in accordance with a third aspect of the disclosure, there is provided a method of providing stability to a vehicle by means of a steering damper 100 as disclosed herein. The method comprises absorbing S1 kinetic energy from a vehicle's steering movement by converting it to heat by providing fluid resistance to hydraulic fluid flowing between the first chamber 113 and the second chamber 114 via the main flow path 132. The method further comprises restricting S2 a flow into the regulator chamber 144 from the main flow path and regulating S3 the volume of the regulator chamber 144 to compensate for volumetric change of hydraulic fluid in the steering damper 100. The steering damper 100 may be adapted in size and shape to fit the size and the requirements of the vehicle. By "restricting a flow", it may be meant regulating flow resistance.

In the drawings and specification, there have been disclosed preferred embodiments and examples of the disclosure and, although specific terms are employed, they are used in a generic and descriptive sense only and not for the purpose of limitation, the scope of the invention being set forth in the following claims. The present disclosure has mainly been described above with reference to a few embodiments. However, as is readily appreciated by a person skilled in the art, other embodiments than the ones disclosed above are equally possible within the scope of the present disclosure, as defined by the appended claims. Although features and elements are described above in particular combinations, each feature or element can be used alone without the other features and elements or in various combinations with or without other features and elements. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain features are recited in mutually different dependent claims does not indicate that a combination of these features cannot be used to advantage. Any reference signs in the claims should not be construed as limiting the scope.

## Claims

1. A steering damper (100, 200) for a vehicle comprising:
a hydraulic chamber (110, 210),
a piston rod (130, 230) and a piston (120, 220) fixedly attached to the piston rod (130, 230), wherein the piston (120, 220) divides the hydraulic chamber (110, 210) in a first chamber (113, 213) and a second chamber (114, 214),
wherein the piston rod (130, 230) comprises:
a main flow path (132, 232) arranged to fluidly connect the first chamber (113, 213) and the second chamber (114, 214), and
a volume regulator assembly (140, 240) arranged internally of the piston rod (130, 230) and is fluidly connected to the main flow path (132, 232),
wherein
the volume regulator assembly (140, 240) comprises:
a separating element (142, 242), and
a regulator chamber (144, 244) having a volume adjustable in size by adjustment of a position of the separating element (142, 242),
wherein the volume regulator assembly (140, 240) is configured to:
restrict a flow into the regulator chamber (144, 244) from the main flow path (132, 232), and
regulate the volume of the regulator chamber (144, 244) to compensate for volumetric change of hydraulic fluid in the steering damper (100, 200).

2. The steering damper (100, 200) according to claim 1, wherein the volume regulator assembly (140, 248) comprises a flow restriction path (148, 248) for allowing a restricted flow of hydraulic fluid between the main flow path and the regulator chamber (144, 244).

3. The steering damper (200) according to any preceding claim, wherein the volume regulator assembly (240) comprises:
a check valve (245) fluidly connected between the main flow path (232) and the regulator chamber (244),
wherein the check valve (245) is configured to open in response to a pressure in the regulator chamber (244) being higher than a pressure in the main flow path (232).

4. The steering damper (200) according to claims 2 and 3, wherein the flow restriction path (248) is integrated with the check valve (245).

5. The steering damper (100, 200) according to any preceding claim, wherein the volume regulator assembly (140, 240) further comprises a spring (149, 249) arranged to bias the separating element (142, 242) towards a neutral position wherein optionally the spring (149, 249) is a gas spring or a mechanical spring.

6. The steering damper (200) according to any preceding claim, further comprising an adjustable main flow path valve (250) for regulating a flow resistance to a hydraulic flow flowing in the main flow path (232).

7. The steering damper (200) according to claim 6, further comprising a main flow path valve adjuster (260) for adjusting the flow resistance provided by the main flow path valve (250) from a distance.

8. The steering damper (200) according to claim 7, wherein the main flow path valve adjuster (260) is arranged coaxially to the piston rod (230) at an end thereof.

9. The steering damper (200) according to any of claims 7 or 8, wherein the main flow path valve adjuster (260) is adjustable by manual means or by electric means.

10. The steering damper (200) according to any of claims 6 to 9, wherein the main flow path valve (250) is a needle valve or a spool valve.

11. The steering damper (100, 200) according to any preceding claim wherein the hydraulic chamber (110, 210) extends from a first end (111, 211) to a second end (112, 212) and wherein the piston rod (130, 230) is extendable through the first end (111, 211) and the second end (112, 212) of the hydraulic chamber (110, 210).

12. The steering damper (100, 200) according to any preceding claim, wherein the volume regulator assembly (140, 240) is arranged inside a portion of the piston rod (130, 230) at least partly displaceable outside the hydraulic chamber (110, 210).

13. The steering damper (200) according to any preceding claim, wherein the piston rod (230) comprises a first elongated portion (231a) and a second elongated portion (231b) which are detachably connected to each other.

14. A vehicle comprising the steering damper (100, 200) according to any preceding claim.

15. A method of providing stability to a vehicle by means of a steering damper (100, 200) according to any of claims 2-13, the method comprises:
a. absorbing (S1) kinetic energy from a vehicle's steering movement by converting it to heat by providing fluid resistance to hydraulic fluid flowing between the first chamber (113, 213) and the second chamber (114, 214) via the main flow path (132, 232),
b. restricting (S2) a flow into the regulator chamber (144, 244) from the main flow path, and
c. regulating (S3) the volume of the regulator chamber (144, 244) to compensate for volumetric change of hydraulic fluid in the steering damper (100, 200).
